# EUROPEAN PATENT APPLICATION

(11) **EP 4 712 547 A1**
(43) Date of publication of application: **18.03.2026**
(21) Application number: 24822522.9
(22) Date of filing: 24.05.2024
(51) Int. Cl.: H04W 28/02

(54) **COMMUNICATION METHOD, APPARATUS AND SYSTEM, AND STORAGE MEDIUM AND PROGRAM PRODUCT**

(30) Priority: 13.06.2023 CN 202310699975
(71) Applicant: Huawei Technologies Co., Ltd., Shenzhen, Guangdong 518129 (CN)
(72) Inventor: CHENG, Wenjie, Shenzhen, Guangdong 518129 (CN); GENG, Tingting, Shenzhen, Guangdong 518129 (CN); ZENG, Yu, Shenzhen, Guangdong 518129 (CN); HU, Xingxing, Shenzhen, Guangdong 518129 (CN)
(74) Representative: Goddar, Heinz J.
(86) International application number: PCT/CN2024/095342
(87) International publication number: WO 2024/255570

(57) **Abstract**

This application discloses a communication method, apparatus, and system, a storage medium, and a program product. A core network element may obtain QoS association information predicted by an access network device, obtain a first QoS parameter set through prediction based on the QoS association information, and send the first QoS parameter set to the access network device. Because the first QoS parameter set is obtained based on the QoS association information predicted by the access network device, a service requirement on an access network side can be better met, so that the access network device can efficiently obtain an available QoS parameter, and efficiency of performing service processing by using the QoS parameter is improved.

## Description

This application claims priority to Chinese Patent Application No. 202310699975.7, filed with the China National Intellectual Property Administration on June 13, 2023 and entitled "COMMUNICATION METHOD, APPARATUS, AND SYSTEM, STORAGE MEDIUM, AND PROGRAM PRODUCT", which is incorporated herein by reference in its entirety.

### TECHNICAL FIELD

This application relates to the field of communication technologies, and in particular, to a communication method, apparatus, and system, a storage medium, and a program product.

### BACKGROUND

A quality of service (quality of service, QoS) mechanism is a security mechanism of a wireless network. A network device processes data with different priorities in the QoS mechanism, to help avoid problems such as a network latency and network congestion.

Currently, a QoS parameter is generated by a core network and then delivered to an access network device. However, the QoS parameter delivered by the core network may not meet a service requirement on an access network side.

### SUMMARY

This application provides a communication method, apparatus, and system, a storage medium, and a program product, so that an access network device can efficiently obtain an available QoS parameter.

According to a first aspect, a communication method is provided. The method includes: obtaining QoS association information predicted based on a first artificial intelligence (artificial intelligence, AI) model; sending the QoS association information to a core network element, where the QoS association information is used to determine a first QoS parameter set; and receiving the first QoS parameter set from the core network element, where the first QoS parameter set includes one or more first QoS parameters.

In this aspect, the core network element may obtain the QoS association information predicted by an access network device, obtain the first QoS parameter set through prediction based on the QoS association information, and send the first QoS parameter set to the access network device. Because the first QoS parameter set is obtained based on the QoS association information predicted by the access network device, a service requirement on an access network side can be better met, so that the access network device can efficiently obtain an available QoS parameter, and efficiency of performing service processing by using the QoS parameter is improved.

In a possible implementation, the first QoS parameter set is obtained by the core network element through prediction based on a second AI model and the QoS association information.

In another possible implementation, the QoS association information includes at least one of the following: predicted information associated with a terminal and predicted information associated with the access network device.

In this implementation, the QoS association information is obtained by the access network device by performing AI inference based on historical QoS flow measurement data of the terminal and/or the access network device by using the first AI model.

In still another possible implementation, the method further includes: receiving a first request from the core network element, where the first request is for requesting to obtain the QoS association information.

In still another possible implementation, the first request includes at least one of the following information: a requested content indication, a reporting mechanism indication, a prediction time period, and an indication carrying validity time.

In this implementation, the first request carries the foregoing information, so that the access network device can accurately report corresponding QoS association information.

In still another possible implementation, the sending the QoS association information to the core network element includes: sending a first message to the core network element based on the first request, where the first message includes the QoS association information and the validity time corresponding to the QoS association information.

In still another possible implementation, the QoS association information includes a second QoS parameter set, the second QoS parameter set includes one or more second QoS parameters, and the second QoS parameter set is based on at least one of predicted information associated with a terminal and predicted information associated with the access network device.

In this implementation, the first AI model of the access network device has a capability of processing the predicted information associated with the terminal and the predicted information associated with the access network device to obtain the second QoS parameter set, so that the core network element can deliver a QoS parameter set that can meet the service requirement on the access network side as much as possible.

In still another possible implementation, QoS parameters in the first QoS parameter set and the second QoS parameter set are completely the same, partially the same, or completely different.

In this implementation, if the second QoS parameter set meets a requirement of the core network element, for example, meets a subscription requirement of a terminal, the first QoS parameter set may be the same as the second QoS parameter set; if some QoS parameters in the second QoS parameter set do not meet the requirement of the core network element, the first QoS parameter set may be partially the same as the second QoS parameter set; or if all QoS parameters in the second QoS parameter set do not meet the requirement of the core network element, the first QoS parameter set may be completely different from the second QoS parameter set.

In still another possible implementation, the first QoS parameter set includes at least one of the following information: an AI identifier associated with the first QoS parameter set and validity information corresponding to the first QoS parameter set.

For example, the validity information includes any one of the following: validity time, an applicable cell, and an applicable beam.

In this implementation, the first QoS parameter set may further include the AI identifier and the validity information. The AI identifier may be an identifier of the first AI model, so that the access network device can select, based on the identifier of the first AI model, a QoS parameter corresponding to a currently used AI model; and/or the AI identifier may be an identifier of an AI service, so that the access network device can select, based on the identifier of the AI service, a QoS parameter corresponding to a current AI service. The access network device may further select, based on the validity message, a QoS parameter that is valid in a current time period. In this way, the access network device can select a QoS parameter set more accurately. In still another possible implementation, the method further includes: receiving a third QoS parameter set from the core network element, where the third QoS parameter set is obtained based on user subscription information and historical QoS flow information, and the third QoS parameter set includes one or more third QoS parameters; and selecting an available QoS parameter set from the first QoS parameter set and the third QoS parameter set.

In still another possible implementation, the first QoS parameter set and the third QoS parameter set are included in a second message, the second message further includes a priority indicator of QoS parameter sets, and the priority indicator of the QoS parameter sets indicates priorities of the first QoS parameter set and the third QoS parameter set. The selecting the available QoS parameter set from the first QoS parameter set and the third QoS parameter set includes: selecting a QoS parameter set with a higher priority from the first QoS parameter set and the third QoS parameter set based on the priority indicator of the QoS parameter sets; or when the QoS parameter set with the high priority is unavailable, selecting a QoS parameter set with a low priority.

In this implementation, the access network device may obtain the first QoS parameter set and the third QoS parameter set by receiving the second message, so that the access network device receives a new QoS parameter set without waiting for the access network device to notify the core network element that the QoS parameter set does not meet the service requirement. In this way, the access network device can obtain an available QoS parameter set in a timely manner.

In still another possible implementation, when the first QoS parameter set is selected, the method further includes: sending a usage status of the first QoS parameter set to the core network element.

In this implementation, the access network device sends the usage status of the first QoS parameter set to the core network element, so that the core network element can optimize, based on the usage status, the second AI model used to predict a QoS parameter set, thereby improving accuracy of predicting the QoS parameter set.

In still another possible implementation, when the first QoS parameter set is selected, the method further includes: optimizing the first AI model based on the usage status of the first QoS parameter set.

According to a second aspect, a communication method is provided. The method includes: receiving QoS association information from an access network device, where the QoS association information is used to determine a first QoS parameter set, and the QoS association information is predicted by the access network device based on a first AI model; determining the first QoS parameter set based on the QoS association information, where the first QoS parameter set includes one or more first QoS parameters; and sending the first QoS parameter set to the access network device.

In a possible implementation, the determining the first QoS parameter set based on the QoS association information includes: obtaining the QoS parameter set through prediction based on a second AI model and the QoS association information.

In another possible implementation, the QoS association information includes at least one of the following: predicted information associated with a terminal and predicted information associated with the access network device.

In still another possible implementation, the method further includes: sending a first request to the access network device, where the first request is for requesting to obtain the QoS association information, and the first request includes at least one of the following information: a requested content indication, a reporting mechanism indication, a prediction time period, and an indication carrying validity time.

In still another possible implementation, the receiving the QoS association information from the access network device includes: receiving a first message from the access network device, where the first message includes the QoS association information and the validity time corresponding to the QoS association information.

In still another possible implementation, the QoS association information includes a second QoS parameter set, the second QoS parameter set includes one or more second QoS parameters, and the second QoS parameter set is based on at least one of predicted information associated with a terminal and predicted information associated with the access network device.

In still another possible implementation, QoS parameters in the first QoS parameter set and the second QoS parameter set are completely the same, partially the same, or completely different.

In still another possible implementation, the first QoS parameter set includes at least one of the following information: an AI identifier associated with the first QoS parameter set and validity information corresponding to the first QoS parameter set.

In still another possible implementation, the validity information corresponding to the first QoS parameter set includes any one of the following: validity time, an applicable cell, and an applicable beam.

In still another possible implementation, the method further includes:
sending a third QoS parameter set to the access network device, where the third QoS parameter set is obtained based on user subscription information and historical QoS flow information, and the third QoS parameter set includes one or more third QoS parameters.

In still another possible implementation, the first QoS parameter set and the third QoS parameter set are included in a second message, the second message further includes a priority indicator of QoS parameter sets, and the priority indicator of the QoS parameter sets indicates priorities of the first QoS parameter set and the third QoS parameter set.

In still another possible implementation, the method further includes: receiving a usage status of the first QoS parameter set from the access network device; and optimizing the second AI model based on the usage status of the first QoS parameter set.

According to a third aspect, a communication method is provided. The method includes: obtaining at least one first QoS parameter set through prediction based on an AI model, where each first QoS parameter set includes one or more QoS parameters; receiving first QoS parameter range information from a core network element, where the first QoS parameter range information includes a parameter range corresponding to a part of or all of the one or more QoS parameters; determining a second QoS parameter set based on the at least one first QoS parameter set, where each of one or more QoS parameters in the second QoS parameter set is within a parameter range corresponding to each QoS parameter; and sending the second QoS parameter set to the core network element.

In this aspect, an access network device obtains the at least one first QoS parameter set through prediction based on the AI model of the access network device, and determines the second QoS parameter set based on the first QoS parameter range information delivered by the core network element. The access network device may determine an available QoS parameter set based on a QoS parameter set obtained by the access network device through prediction and QoS parameter range information delivered by the core network element, to meet a service requirement of a terminal.

In a possible implementation, the method further includes: if at least one QoS parameter in any first QoS parameter set is not within a parameter range corresponding to the at least one QoS parameter, sending a first request to the core network element, where the first request is for requesting to modify the first QoS parameter range information, and the first request includes an identifier of the QoS parameter that is in the first QoS parameter set and that is not within the parameter range.

In another possible implementation, the first request further includes at least one of the following information: an identifier of the first QoS parameter set, a reason why the first QoS parameter set is unavailable, and a parameter value of the QoS parameter that is in the first QoS parameter set and that is not within the parameter range.

In still another possible implementation, the method further includes: receiving second QoS parameter range information from the core network element, where the second QoS parameter range information is obtained by modifying the first QoS parameter range information based on the first request.

According to a fourth aspect, a communication method is provided. The method includes: sending first QoS parameter range information to an access network device, where the first QoS parameter range information includes a parameter range corresponding to a part of or all of one or more QoS parameters; and receiving a second QoS parameter set from the access network device, where the second QoS parameter set is obtained based on at least one first QoS parameter set, the at least one first QoS parameter set is obtained through prediction based on an AI model, the second QoS parameter set includes one or more QoS parameters, and each of the one or more QoS parameters in the second QoS parameter set is within a parameter range corresponding to each QoS parameter.

In a possible implementation, the method further includes: if at least one QoS parameter in any first QoS parameter set is not within a parameter range corresponding to the at least one QoS parameter, receiving a first request from the access network device, where the first request is for requesting to modify the first QoS parameter range information, and the first request includes an identifier of the QoS parameter that is in the first QoS parameter set and that is not within the parameter range; modifying the first QoS parameter range information based on the first request, to obtain second QoS parameter range information; and sending the second QoS parameter range information to the access network device.

In another possible implementation, the first request further includes at least one of the following information: an identifier of the first QoS parameter set, a reason why the first QoS parameter set is unavailable, and a parameter value of the QoS parameter that is in the first QoS parameter set and that is not within the parameter range.

The methods in the first aspect and the third aspect may be performed by an access network device, may be performed by a module (for example, a processor, a chip, or a chip system) used in the access network device, or may be implemented by a logical node, a logical module, or software that can implement all or some functions of the access network device.

The methods in the second aspect and the fourth aspect may be performed by a core network element, may be performed by a module (for example, a processor, a chip, or a chip system) used in the core network element, or may be implemented by a logical node, a logical module, or software that can implement all or some functions of the core network element.

According to a fifth aspect, a communication apparatus is provided, and is configured to implement the communication method in any one of the first aspect or the implementations of the first aspect; or configured to implement the communication method in any one of the third aspect or the implementations of the third aspect. The apparatus may be an access network device, may be a module (for example, a processor, a chip, or a chip system) used in the access network device, or may be a logical node, a logical module, or software that can implement all or some functions of the access network device.

According to a sixth aspect, a communication apparatus is provided, and is configured to implement the communication method in any one of the second aspect or the implementations of the second aspect; or configured to implement the communication method in any one of the fourth aspect or the implementations of the fourth aspect. The apparatus may be a core network element, may be a module (for example, a processor, a chip, or a chip system) used in the core network element, or may be a logical node, a logical module, or software that can implement all or some functions of the core network element.

In a possible implementation, the communication apparatus in the fifth aspect and the sixth aspect includes a module configured to perform the method in any one of the first aspect to the fourth aspect or any one of the implementations of the first aspect to the fourth aspect.

In another possible implementation, the communication apparatus in the fifth aspect and the sixth aspect includes a processor coupled to a memory. The processor is configured to support the apparatus in performing a corresponding function in the foregoing communication method. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In another possible implementation, the communication apparatus in the fifth aspect and the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatus in the fifth aspect and the sixth aspect is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a seventh aspect, a computer-readable storage medium is provided. The computer-readable storage medium stores a computer program or instructions. When the computer program or the instructions are executed, the methods in the foregoing aspects are implemented.

According to an eighth aspect, a computer program product including instructions is provided. When the instructions are run on a communication apparatus, the communication apparatus is caused to perform the methods in the foregoing aspects.

According to a ninth aspect, a communication system is provided. The communication system includes an access network device and a core network element. The access network device may perform the method in the first aspect or the third aspect, and the core network element may perform the method in the second aspect or the fourth aspect.

### BRIEF DESCRIPTION OF DRAWINGS

FIG. 1 is a simplified diagram of a communication system according to an embodiment of this application;
FIG. 2 is a diagram of an application framework of AI in NR according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes embodiments of this application with reference to the accompanying drawings.

The technologies provided in this application may be applied to various communication systems. For example, the communication system may be a 4th generation (4th generation, 4G) communication system (for example, a long-term evolution (long-term evolution, LTE) system), a 5th generation (5th generation, 5G) communication system, a future communication system, for example, a 6G communication system, or a converged system of a plurality of systems. The 5G communication system may also be referred to as a new radio (new radio, NR) system. In addition, the communication system provided in this application may include a non-terrestrial communication network (non-terrestrial network, NTN) and/or a terrestrial communication network (terrestrial network, TN).

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description. For example, the communication system may include at least one terminal and at least one access network device. The access network device may send a downlink signal to the terminal, and/or the terminal may send an uplink signal to the access network device. In addition, it may be understood that, if the communication system includes a plurality of terminals, the plurality of terminals may alternatively send signals to each other. In other words, both a signal sending network element and a signal receiving network element may be terminals.

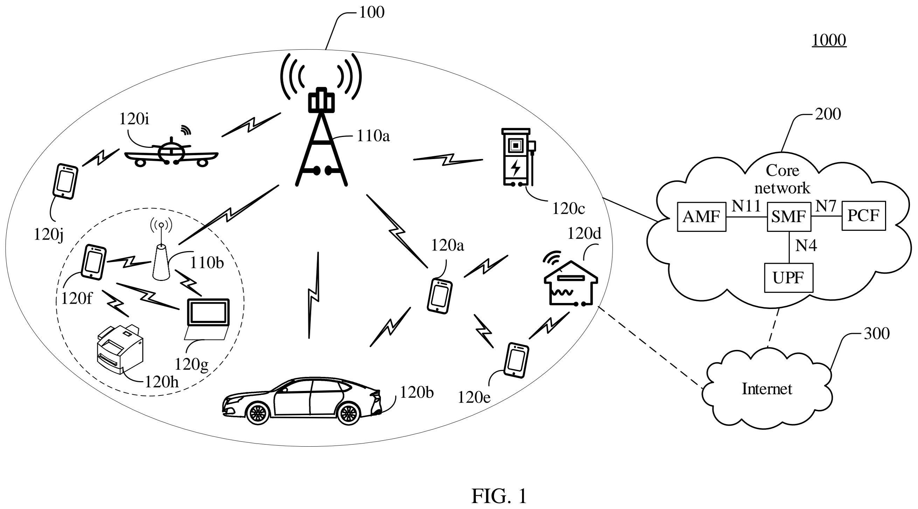

FIG. 1 is a simplified diagram of a communication system according to an embodiment of this application. As shown in FIG. 1, the communication system 1000 includes a radio access network 100, a core network 200, and an internet 300. The radio access network 100 may be a next generation (for example, 6G or a later version) radio access network, or a conventional (for example, 5G or 4G) radio access network. One or more terminals (120a to 120j, which are collectively referred to as 120) may be interconnected or connected to one or more network devices (110a and 110b, which are collectively referred to as 110) in the radio access network 100. The core network 200 may include one or more core network elements. A 5G core network is used as an example. The 5G core network includes an access and mobility management function (access and mobility management function, AMF) network element responsible for services such as mobility management and access management, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined together to implement some control functions. For example, the AMF, the SMF, and the PCF may be combined together to serve as one core network element. The core network element in embodiments of this application may be any one of the AMF, the SMF, the UPF, the PCF, and the like. FIG. 1 is merely a diagram. The communication system may further include another device, for example, a wireless relay device and/or a wireless backhaul device, which are/is not drawn in FIG. 1. For example, in actual application, the communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the communication system are not limited in embodiments of this application.

The network device may be an entity on a network side that is configured to transmit or receive a signal. The network device may be an access network device via which the communication device accesses the communication system in a wireless manner. For example, the network device may be a base station. The base station may broadly cover various names in the following, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission point (transmitting and receiving point, TRP), a transmitting point (transmitting point, TP), a multi-RAT radio node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio frequency head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. The network device may alternatively be a communication module, a modem, or a chip disposed in the foregoing device or apparatus. The network device may alternatively be a mobile switching center, a device that takes on a base station function in device-to-device (device-to-device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or some functions of the network device.

The network device may be fixed or mobile. For example, the base stations 110a and 110b are stationary and are responsible for wireless transmission and reception in one or more cells from the communication device 120. A helicopter or uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this application, a communication apparatus configured to implement functions of the access network may be an access network device, may be a network device having a part of the functions of the access network, or may be an apparatus that can support implementation of the functions of the access network, for example, a chip system, a hardware circuit, a software module, or a combination of a hardware circuit and a software module. The apparatus may be installed in the access network device or used together with the access network device. In a method in this application, an example in which the communication apparatus configured to implement the functions of the access network device is an access network device is used for description.

In this application, the terminal 120 may be various devices that provide voice and/or data connectivity for a user, and may communicate with one or more core networks over a radio access network (Radio Access Network, RAN). The terminal provided in this application may be used in various communication scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality (virtual reality, VR), augmented reality (augmented reality, AR), industrial control (industrial control), self-driving (self-driving), telemedicine (telemedical), smart grid (smart grid), smart furniture, smart office, smart wear, smart transportation, and smart city (smart city). The terminal device may be a mobile phone (mobile phone), a tablet computer (pad), a computer having a wireless transceiver function, a wearable device, an aerospace device, an uncrewed aerial vehicle device, or the like. The communication device 120 may be a wireless device in the foregoing various communication scenarios or an apparatus configured to be disposed in the wireless device, for example, a communication module, a modem, or a chip in the foregoing device. The communication device may also be referred to as a terminal, a terminal device, a user equipment (user equipment, UE), a mobile station (mobile station, MS), a mobile terminal (mobile terminal, MT), or the like. The communication device may alternatively be a communication device in a future communication system. The communication device may be used in a dedicated network device or a general-purpose device. A specific technology and a specific device form used by the communication device are not limited in embodiments of this application.

For example, the communication device may be configured to serve as a base station. For example, the UE may serve as a scheduling entity that provides sidelink signals between UEs in V2X, D2D, P2P, or the like. As shown in FIG. 1, the cellular phone 120a and the car 120b communicate with each other by using a sidelink signal. The cellular phone 120a communicates with the smart home device 120e without relaying a communication signal via the base station 110b.

In this application, a communication apparatus configured to implement functions of the terminal 120 may be a terminal device, may be a module that has some functions of the terminal, or may be an apparatus that supports implementation of the functions of the terminal, for example, a chip system. The apparatus may be installed in the terminal or used together with the terminal. In this application, the chip system may include a chip, or may include a chip and another discrete device. In the technical solutions provided in this application, an example in which the communication apparatus is a terminal or a UE is used for description.

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

For example, the protocol layer structure between the access network device and the terminal may further include an AI layer, configured to perform transmission of data related to an AI function.

In an example, the access network device may include a CU and a DU. A plurality of DUs may be controlled by one CU in a centralized manner. For example, an interface between the CU and the DU may be referred to as an F1 interface. A control plane (control panel, CP) interface may be F1-C, and a user plane (user panel, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that processing function division of the CU and the DU based on the protocol layers is merely an example, and division may alternatively be performed in another manner. For example, the CU or the DU may be divided into functions having more protocol layers. For another example, the CU or the DU may alternatively be divided into some processing functions having protocol layers. In a design, some functions of an RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements, for example, based on a delay. Functions whose processing time needs to satisfy a delay requirement are set on the DU, and functions whose processing time does not need to satisfy the delay requirement are set on the CU. In another design, the CU may alternatively have one or more functions of a core network. For example, the CU may be disposed on a network side to facilitate centralized management. In another design, an RU of the DU is disposed remotely. The RU has a radio frequency function. In another design, the DU and the RU may be further divided at a physical layer (physical layer, PHY). For example, the DU may implement a higher-layer function of the PHY layer, and the RU may implement a lower-layer function of the PHY layer.

For example, the functions of the CU may be implemented by one entity, or may be implemented by different entities. For example, the functions of the CU may be further divided. To be specific, a control plane and a user plane are separated and implemented by different entities, which are respectively a CU control plane entity (namely, a CU-CP entity) and a CU user plane entity (namely, a CU-UP entity). The CU-CP entity and the CU-UP entity may be coupled to the DU to jointly complete functions of the access network device.

In the foregoing architecture, signaling generated by the CU may be sent to a terminal via the DU, or signaling generated by a terminal may be sent to the CU via the DU. For example, signaling at an RRC layer or the PDCP layer is finally processed into signaling at the physical layer and sent to the terminal, or is converted from signaling received from the physical layer. In this architecture, signaling at the RRC layer or the PDCP layer may be considered as being sent via the DU or being sent via the DU and the RU.

For example, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In different systems, the CU (or the CU-CP and the CU-UP), the DU, or the RU may alternatively have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU.

It should be understood that quantities and types of devices in the communication system shown in FIG. 1 are merely used as examples. This application is not limited thereto. In actual application, the communication system may alternatively include more terminals, more access network devices, and more core network elements, and may alternatively include another network element, for example, a network element configured to implement an artificial intelligence function.

It may be understood that all or a part of functions implemented by one or more of the terminal, the access network device, the core network element, or the network element configured to implement the artificial intelligence function may be virtualized, that is, implemented through one or more of a dedicated processor or a general-purpose processor and a corresponding software module. Because the terminal and the access network device are related to an air interface transmission interface, receiving and sending functions of the interface may be implemented by hardware. For example, one or more functions of a virtualized terminal, access network device, core network element, or network element configured to implement the artificial intelligence function may be implemented by a cloud device, for example, implemented by a cloud device in an over the top (over the top, OTT) system.

The method provided in this application may be used for communication between the access network device and the core network element, but this is not limited thereto.

In this application, "sending information to... (for example, an access network device)" or a related illustration in the accompanying drawings may be understood as that a destination end of the information is the access network device, and may include directly or indirectly sending the information to the access network device. "Receiving information from... (for example, an access network device)" or "receiving information that is from... (for example, an access network device)" or a related illustration in the accompanying drawings may be understood as that a source end of the information is the access network device, and may include directly or indirectly receiving information from the access network device. Necessary processing, for example, a format change, may be performed on the information between the source end and the destination end for information sending. However, the destination end can understand valid information from the source end. A similar expression in this application may be understood similarly, and details are not described herein.

Embodiments of this application relate to the following concepts:
AI is a technology that simulates a human brain to perform complex computing. With improvement of data storage and computing capabilities, AI is increasingly used. Currently, it is proposed to apply AI to NR to improve network performance and user experience through intelligent data collection and analysis.

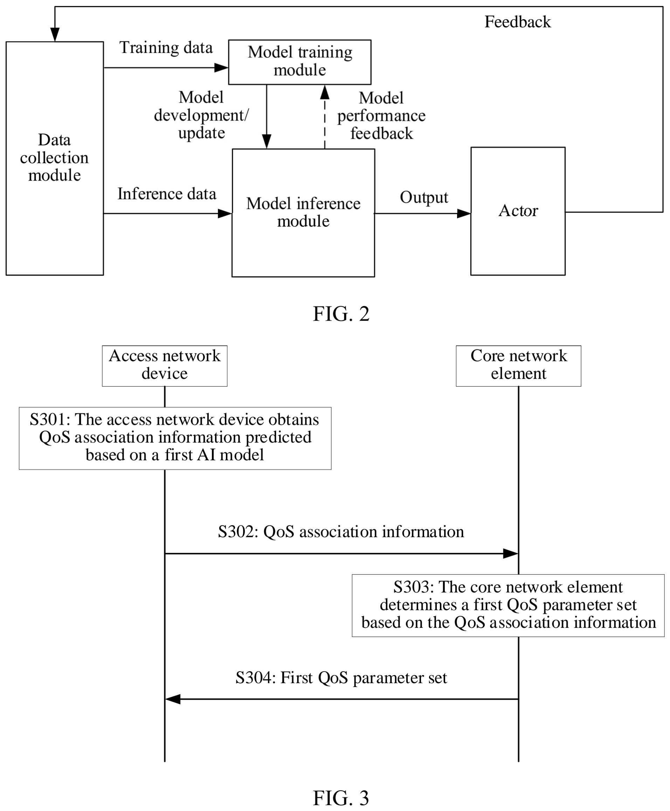

FIG. 2 is a diagram of an application framework of AI in NR according to an embodiment of this application. The application framework includes the following modules: a data collection (data collection) module, a model training (model training) module, a model inference (model inference) module, and an actor (actor).

The model training module and the model inference module are examples of an AI module. The AI module is a module having a machine learning computing capability. For example, the AI module may be located in an access network device (for example, if the access network device is in a separated architecture, the AI module may be located in a CU), may be located in a terminal, or may independently be a network element entity AI control layer (AI control layer, AIC). The communication system shown in FIG. 1 is used as an example, the AI module may be located in the radio access network 100, may be located in the core network 200, or may be located in the internet 300. If an O-RAN architecture is used, the AI module may alternatively be disposed in a RAN intelligent controller (RAN intelligent controller, RIC). The RIC may obtain network-side and/or terminal-side information from the access network device and/or the terminal for AI model training or inference. A training or inference result may be transferred to a RAN node and/or the terminal. When the AI model is located in the CU, and a CP and a UP of the CU are separated, the CP may be responsible for receiving the AI model and responsible for subsequent AI inference and policy generation functions. When a CU-CP is further divided into a CU-CP 1 and a CU-CP 2, the CU-CP 1 may be responsible for receiving the AI model and a subsequent inference function of the AI model, and generating specific interaction signaling, and the CU-CP 2 sends the signaling.

The data collection module may store a data input from a gNB, a gNB-CU, a gNB-DU, a UE, or another management entity, and use the data input as a database for AI model training and data analysis and inference. The model training module analyzes training data (training data) provided by the data collection module and provides an optimal AI model. A model legend module uses the AI model to provide Al-based appropriate prediction for network operation or guide a network to perform policy adjustment, based on data provided by the data collection module. Related policy adjustment is planned by a same actor entity, and an adjusted policy is sent to a plurality of network entities for operation. In addition, after a related policy is applied, specific performance of the network is input to a database again for storage.

QoS refers to a capability of a network to use various basic technologies to provide a better service for specified network communication, is a security mechanism of the network, and is a technology used to resolve problems such as a network latency and network congestion. In a protocol data unit session (PDU session), data flows with a same QoS requirement are referred to as a quality of service flow (QoS flow). In addition, for each UE, an access network device establishes one or more data radio bearers (data radio bearer, DRB) for each PDU session. There is a mapping relationship between a QoS flow and a DRB.

The following describes specific content of a QoS parameter. First, it should be noted that symbols ">", ">>", and ">>>" in the following tables related to QoS parameters represent levels of information elements. For example, ">" represents a first-level information element, ">>" represents a second-level information element, ">>>" represents a third-level information element, and so on. Information elements at levels have a nested relationship based on the levels. For example, the second-level information element is included in the first-level information element, and the third-level information element is included in the second-level information element. It may be understood that both the second-level information element and the third-level information element are included in the first-level information element. If the foregoing symbols such as ">" appear in an example of an information element design in this application, meanings of the symbols are the same. Details are not described again.

For example, in NR, the QoS parameter may include one or more of the following:

**Table 1**

| |
|---|
| QoS Flow Level QoS Parameters |
| CHOICE *QoS Characteristics* |
| *>Non-dynamic 5QI* |
| >>Non Dynamic 5QI Descriptor |
| *>Dynamic 5QI* |
| >>Dynamic 5QI Descriptor |
| Allocation and Retention Priority (ARP) |
| GBR QoS Flow Information |
| Reflective QoS Attribute (RQA) |

5QI represents a QoS requirement, for example, a resource type, a priority, a delay, and a packet loss rate of a service. The resource type is used to determine whether a dedicated network resource needs to be permanently allocated for a QoS flow-level guaranteed flow bit rate (guaranteed flow bit rate, GFBR). The resource type includes a guaranteed bit rate (guaranteed bit rate, GBR), a delay critical guaranteed bit rate (delay critical GBR), and a non-guaranteed bit rate (non-GBR). A bandwidth of a GBR service (a real-time service, for example, voice, video, and real-time game) can be guaranteed. A bandwidth of a non-GBR service (a non-real-time service, for example, email, FTP, and HTTP) cannot be guaranteed. The delay critical GBR is used to support a delay-sensitive URLLC service, for example, smart grid and factory. QoS flows corresponding to the GBR service and the delay critical GBR service are GBR QoS flows, and a QoS flow corresponding to the non-GBR service is a non-GBR QoS flow.

5QIs are classified into a non-dynamic 5QI (non-dynamic 5QI) and a dynamic 5QI (dynamic 5QI), as shown in Table 2 and Table 3 below respectively.

**Table 2**

| |
|---|
| Non-Dynamic 5QI Descriptor |
| 5QI |
| Priority Level |
| Averaging Window |
| Maximum Data Burst Volume |
| CN Packet Delay Budget Downlink |
| CN Packet Delay Budget Uplink |

**Table 3**

| |
|---|
| Dynamic 5QI Descriptor |
| Priority Level |
| Packet Delay Budget |
| Packet Error Rate |
| 5QI |
| Delay Critical |
| Averaging Window |
| Maximum Data Burst Volume |
| Extended Packet Delay Budget |
| CN Packet Delay Budget Downlink |
| CN Packet Delay Budget Uplink |

Priority Level (Priority Level) represents a resource scheduling priority of a 5G QoS flow, and is applicable to different QoS flows of a same UE and QoS flows of different UEs, where a smaller value indicates a higher priority. Averaging Window (averaging window) is defined for the GBR QoS flow and is used by a related network element to collect statistics on the GFBR and an MFBR. Maximum Data Burst Volume (maximum data burst volume) is applicable only to the delay critical GBR and is used for an ultra-reliable low-latency communication (ultra-reliable low-latency communication, URLLC) service, and represents a maximum data amount transmitted by the access network device in a packet delay budget (packet delay budget, PDB). The packet delay budget defines an upper limit (a maximum value) of a transmission delay of a data packet between a UE and an anchor UPF. Packet Error Rate (packet error rate) defines an upper limit, to be specific, an upper limit of a rate of a data packet that has been processed by a radio link control (radio link control, RLC) layer of a transmit end but is not submitted by a corresponding receive end to an upper layer (a packet data convergence protocol (packet data convergence protocol, PDCP) layer), and a maximum bit error rate that can be tolerated.

A value of 5QI is a value ranging from 0 to 255. A value of a QoS requirement of the non-dynamic 5QI includes, for example, 1 to 9, 65 to 67, 69 to 76, 79, 80, and 82 to 86. The non-dynamic 5QI may be used for the GBR service, the non-GBR service, and the delay critical GBR service. A QoS requirement of the dynamic 5QI may be customized.

In Table 1, for Allocation and Retention Priority (allocation and retention priority, ARP), when a resource is limited, whether to accept a DRB establishment or modification request may be determined based on the ARP; and when congestion occurs, which DRB or DRBs are to be released may be determined based on the ARP.

In Table 1, GBR QoS Flow Information is information related to the GBR QoS flow, and specifically includes one or more items in the Table 4 below:

**Table 4**

| |
|---|
| GBR QoS Flow Information |
| Maximum Flow Bit Rate Downlink (MFBR-DL) |
| Maximum Flow Bit Rate Uplink (MFBR-UL) |
| Guaranteed Flow Bit Rate Downlink (GFBR-DL) |
| Guaranteed Flow Bit Rate Uplink (GFBR-UL) |
| Notification Control (NC) (ENUMERATED (notification requested, ...)) |
| Maximum Packet Loss Rate Downlink (MPLR-DL) |
| Maximum Packet Loss Rate Uplink (MPLR-UL) |
| Alternative QoS Parameters Set List |

The GFBR and the MFBR are a guaranteed flow bit rate and a maximum flow bit rate that can be provided by the QoS flow. In other words, a dedicated network resource is allocated to the GBR QoS flow to ensure that a bit rate of the flow is not lower than the GFBR and not higher than the MFBR. Both the GFBR and the MFBR are notified by the core network element to the access network device. An MPLR is a maximum packet loss rate that can be tolerated in uplink and downlink directions of the QoS flow, and is applied only to a voice media service. Notification Control (notification control, NC) is used to control whether the access network device is to report a message to notify the core network element when the GFBR, a PDB, or a PER of the GBR QoS flow cannot be met. After NC is enabled, when a GFBR, a PDB, or a PER of a QoS flow cannot meet a GFBR, a PDB, or a PER in a corresponding QoS profile, the access network device sends a notification to an SMF, and the core network element subsequently modifies or releases the QoS flow. Alternative QoS Parameters Set List is an alternative QoS parameter set of the QoS flow, and specifically includes one or more items in the Table 5 below:

**Table 5**

| |
|---|
| Alternative QoS Parameters Set List |
| Alternative QoS Parameters Set Item |
| > Alternative QoS Parameters Set Index |
| >Guaranteed Flow Bit Rate Downlink (GFBR-DL) |
| >Guaranteed Flow Bit Rate Uplink (GFBR-UL) |
| >Packet Delay Budget (PDB) |
| >Packet Error Rate (PER) |

Alternative QoS Parameters Set Index represents an index of the alternative QoS parameter set. A notification sent by the access network device includes the index of the alternative QoS parameter set.

To distinguish between the alternative QoS parameter set and another QoS parameter set in QoS parameter sets, in this application, QoS parameter sets other than the alternative QoS parameter set are collectively referred to as a basic QoS parameter.

In Table 1, Reflective QoS Attribute (reflective QoS attribute, RQA) is used by the UE to map uplink user plane data (traffic) to a QoS flow when a core network does not provide a mapping rule during sending the uplink user plane data by the UE. This reduces signaling overheads for mapping, for example, overheads for browsing a web page. Reflective QoS Attribute is applicable to the non-GBR QoS flow.

Currently, an AMF delivers the QoS parameter to the access network device. However, when generating the QoS parameter, the core network element lacks information on an access network side, for example, cell load information and terminal information. In addition, the access network device notifies the core network element only when the QoS parameter does not meet the requirement. As a result, problem identification is delayed, and unavailability of the QoS parameter cannot be identified in advance.

In view of this, embodiments of this application provide a communication solution. A core network element may obtain QoS association information predicted by an access network device through an AI model, where high-precision information on a terminal side and high-precision information on an access network device side are considered for the QoS association information, the core network element obtains a first QoS parameter set through prediction based on the QoS association information, and the core network element sends the first QoS parameter set to the access network device. Therefore, the core network element receives a notification without waiting for the access network device to give feedback that a QoS parameter does not meet a requirement, so that the access network device obtains a QoS parameter that can meet a service requirement of a terminal, and the access network device can obtain an available QoS parameter in a timely manner.

The following describes in detail a communication method provided in embodiments of this application. It may be understood that, in this application, an example in which an access network device and a core network element are used as execution entities of an interaction example is used for description. However, the execution entities of the interaction example are not limited in this application. For example, the access network device in the method provided in this application may alternatively be a chip, a chip system, or a processor used in the access network device, or may be a logical node, a logical module, or software that can implement all or some of functions of the access network devices. The core network element in the method provided in this application may alternatively be a chip, a chip system, or a processor used in the core network element, or may be a logical node, a logical module, or software that can implement all or some functions of the core network element.

FIG. 3 is a schematic flowchart of a communication method according to an embodiment of this application. The method may include the following steps.

S301: An access network device obtains QoS association information predicted based on a first AI model.

Specifically, the access network device stores the first AI model, so that the access network device may perform training, inference, update, and evaluation by using the first AI model. In this embodiment, the access network device may use historical information associated with a terminal and/or historical information associated with the access network device as input information of the first AI model, to obtain the QoS association information through inference or prediction by using the first AI model. In other words, the QoS association information is an inference result obtained by the access network device based on the first AI model. For example, the first AI model may be a recurrent neural network, a convolutional neural network, or a graph neural network.

For example, the historical information associated with the terminal may include at least one of the following: historical channel measurement data, a historical terminal movement path, a historical uplink and downlink throughput, a historical packet loss rate, a historical packet delay, and a historical terminal service type. The channel measurement data may be reference signal received power (reference signal received power, RSRP), reference signal received quality (reference signal received quality, RSRQ), or the like.

For example, the historical information associated with the access network device may include at least one of the following: historical cell load and historical beam-level load.

For example, the access network device uses historical information associated with the terminal at a moment t and/or historical information associated with the access network device at the moment t as input information of the first AI model, to obtain QoS association information at a future moment (t+5) through inference based on the first AI model. The moment may be absolute time or relative time of a communication system.

It may be understood that the first AI model is an AI model that can be used in any AI use case. For example, AI use cases for inference/training by the access network device include: network energy saving, load balancing, and mobility optimization enhancement. An execution policy of the AI use case may be based on an inference result of the AI model. Network energy saving is used as an example. Energy efficiency of a network is predicted through the AI model, and the access network device generates a network energy saving policy based on the predicted energy efficiency, to achieve an objective of energy saving.

S302: The access network device sends the QoS association information to a core network element. Correspondingly, the core network element receives the QoS association information.

After obtaining the QoS association information, the access network device sends the QoS association information to the core network element. The QoS association information is used by the core network element to determine a first QoS parameter set.

S303: The core network element determines the first QoS parameter set based on the QoS association information.

The core network element stores a second AI model. Therefore, the core network element may perform an operation, for example, training, inference, update, or evaluation by using the second AI model. In this embodiment, the core network element may obtain the first QoS parameter set through inference by using the second AI model. The second AI model may be a recurrent neural network, a convolutional neural network, a graph neural network, or the like. The second AI model may be the same as or different from the first AI model.

Specifically, the core network element may perform AI inference by using the second AI model based on the received QoS association information, historical QoS flow information, terminal subscription information, and the like, to obtain the first QoS parameter set through prediction. The first QoS parameter set may also be referred to as a predicted QoS (predicted QoS, pQoS) parameter set. The first QoS parameter set includes one or more first QoS parameters. The first QoS parameter may be of the QoS parameters mentioned in Table 1 to Table 5, but is not limited thereto.

Because the first QoS parameter set is based on the QoS association information, and the QoS association information is obtained through prediction based on the historical information associated with the terminal and/or the historical information associated with the access network device, the first QoS parameter set can better meet a service requirement on an access network side.

The core network element may determine, based on AI implementation of the core network element, a specific manner of predicting the first QoS parameter set based on the second AI model. For example, the core network element may predict a pQoS parameter set 1 of a future time period 1 based on the historical QoS flow information, and determine, based on a packet delay of the terminal in the QoS association information, whether the pQoS parameter set 1 is appropriate. If the pQoS parameter set 1 is appropriate, the first QoS parameter set determined in this step is the pQoS parameter set 1. If the pQoS parameter set 1 is inappropriate, the core network element modifies the pQoS parameter set 1 to a pQoS parameter set 2 based on other information such as the packet delay of the terminal in the QoS association information and terminal subscription information that is obtained by the core network element. For example, the core network element determines, based on the packet delay of the terminal, that if the access network device uses the pQoS parameter set 1, the packet delay of the terminal is high in a future period of time, and the service requirement is not met. Therefore, the core network element may determine, based on the terminal subscription information, that a parameter range of pQoS parameters in the pQoS parameter set 1 may be narrowed, to obtain the pQoS parameter set 2, and the pQoS parameter set 2 can meet the packet delay of the terminal. In this case, the first QoS parameter set determined in this step is the pQoS parameter set 2.

S304: The core network element sends the first QoS parameter set to the access network device. Correspondingly, the access network device receives the first QoS parameter set.

After determining the first QoS parameter set, the core network element sends the first QoS parameter set to the access network device.

The first QoS parameter set includes one or more first QoS parameters. For example, the first QoS parameter set may be in a form of a QoS parameter list, and the list includes the one or more first QoS parameters.

After receiving the first QoS parameter set, the access network device may choose to perform QoS flow transmission by using the first QoS parameter set.

According to the communication method provided in this embodiment of this application, the core network element may obtain the QoS association information predicted by the access network device, obtain the first QoS parameter set through prediction based on the QoS association information, and send the first QoS parameter set to the access network device. Because the first QoS parameter set is obtained based on the QoS association information predicted by the access network device, the service requirement on the access network side can be better met, so that the access network device can efficiently obtain an available QoS parameter, and efficiency of performing service processing by using the QoS parameter is further improved.

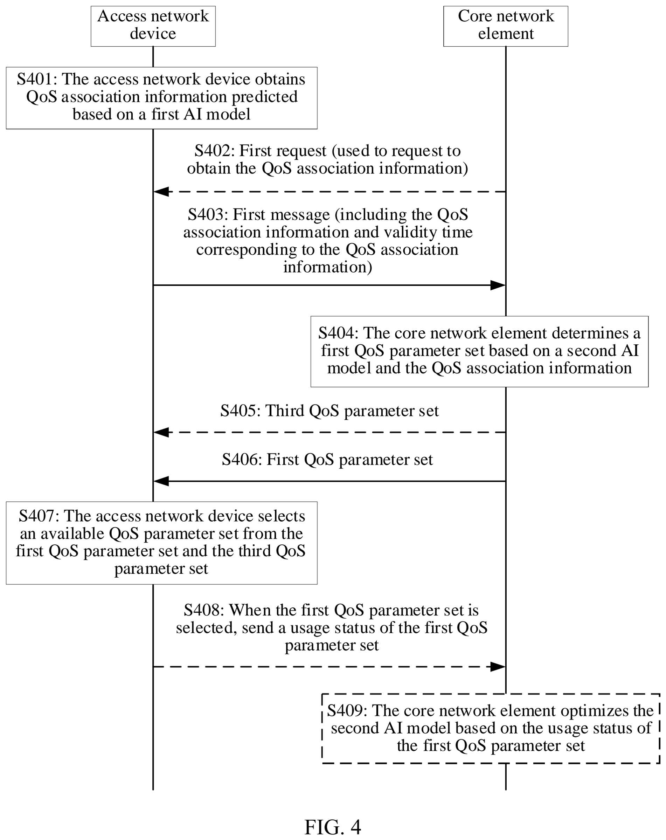

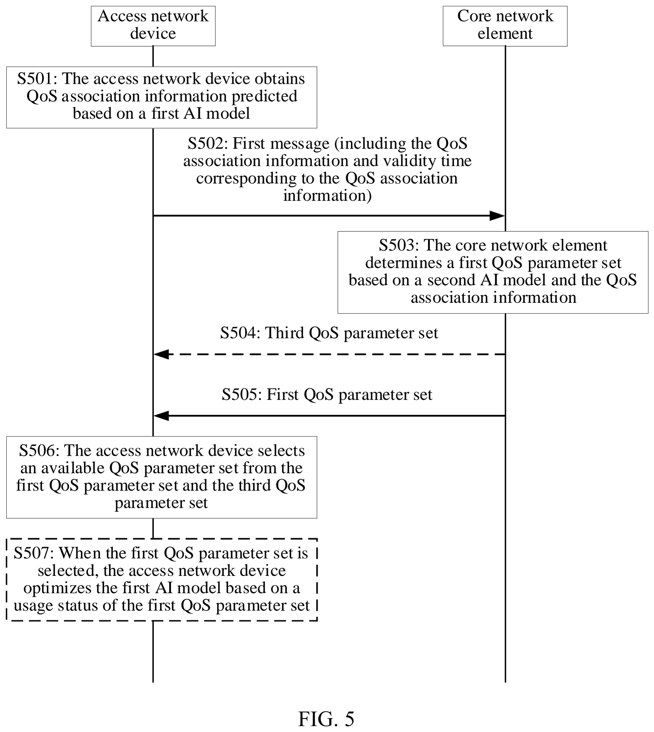

The QoS association information may include different content. The following separately describes content of different QoS association information with reference to embodiments in FIG. 4 and FIG. 5.

FIG. 4 is a schematic flowchart of another communication method according to an embodiment of this application. The method may include the following steps.

S401: An access network device obtains QoS association information predicted based on a first AI model.

For a specific implementation of this embodiment, refer to step S301 in the embodiment shown in FIG. 3. Specifically, in this embodiment, for example, the access network device uses historical information associated with a terminal at a moment t as input information of the first AI model, to obtain, through prediction, predicted information associated with the terminal at a moment (t+5); or the access network device uses historical information associated with the access network device at the moment t as input information of the first AI model, to obtain, through prediction, predicted information associated with the access network device at the moment (t+5); or the access network device uses the historical information associated with the terminal at the moment t and the historical information associated with the access network device at the moment t as input information of the first AI model, and separately obtains, through prediction, the predicted information associated with the terminal at the moment (t+5) and the predicted information associated with the access network device at the moment (t+5).

S402: A core network element sends a first request to the access network device. Correspondingly, the access network device receives the first request.

Before predicting a first QoS parameter set, the core network element may request the access network device to obtain the QoS association information. Therefore, the core network element sends the first request to the access network device, where the first request is for requesting to obtain the QoS association information.

The first request includes at least one of the following information: a requested content indication, a reporting mechanism indication, a prediction time period, and an indication carrying validity time.

For example, the requested content indication is used to request predicted information associated with the terminal; or the requested content indication is used to request predicted information associated with the access network device; or the requested content indication is used to request the predicted information associated with the terminal and the predicted information associated with the access network device; or the requested content indication indicates information obtained by the access network device through prediction based on an internal implementation. In this case, the predicted information is reported to the core network element, and the core network element does not indicate a specific type of to-be-reported information.

For example, the reporting mechanism indication indicates that the access network device reports the QoS association information once when receiving the first request, or indicates that the access network device periodically reports the QoS association information when receiving the first request (where the first request may further include a reporting periodicity).

For example, the prediction time period indicates a specific prediction time period, where QoS association information in the specific prediction time period is to be sent by the access network device. The access network device may use historical information associated with the terminal and/or historical information associated with the access network device as input information of the first AI model, and perform prediction by using the first AI model, to obtain an inference result in a prediction time period, that is, obtain predicted information associated with the terminal and/or predicted information associated with the access network device that are/is in the prediction time period. The prediction time period corresponds to a time period of the input information. The access network device may obtain inference results in a plurality of prediction time periods based on different input information. The different input information may be information associated with the terminal at different historical moments and/or information associated with the access network device at different historical moments. The core network element may indicate, through the prediction time period, the access network device to send QoS association information in a specific prediction time period. For example, the prediction time period may be indicated by information such as prediction start time, prediction end time, or prediction duration. For example, if the prediction time period is [Tₙ₊₁, Tₙ₊₅], and the core network element indicates the access network device to send QoS association information that is in the time period [Tₙ₊₁, Tₙ₊₅], the access network device may perform prediction by using the first AI model based on input information that is in a historical time period [Tₙ₋₅, Tₙ], to obtain an inference result that is in the time period [Tₙ₊₁, Tₙ₊₅]. For example, the first request may alternatively not include the prediction time period, and the access network device determines a specific prediction time period, where QoS association information in the specific prediction time period is to be sent by the access network device.

For example, the indication carrying validity time indicates the access network device to include the validity time, corresponding to the QoS association information, in the QoS association information when the access network device sends the QoS association information. The validity time corresponding to the QoS association information is a time period in which the QoS association information is valid. In other words, the QoS association information is valid in the time period.

S403: The access network device sends a first message to the core network element based on the first request. Correspondingly, the core network element receives the first message.

The first message includes the QoS association information obtained by the access network device. The QoS association information is used to assist the core network element in determining the first QoS parameter set.

For example, if the first request includes the reporting mechanism indication, and the reporting mechanism indication indicates that the access network device reports the QoS association information once when receiving the first request, the access network device may send the first message to the core network element according to the reporting mechanism indication. If the reporting mechanism indication indicates that the access network device periodically reports the QoS association information when receiving the first request, the access network device periodically sends the first message to the core network element based on an indicated reporting periodicity.

For example, if the first request includes the prediction time period, the QoS association information includes predicted information associated with the terminal in the prediction time period and/or predicted information associated with the access network device in the prediction time period. If the first request does not include the prediction time period, the access network device determines a specific prediction time period, where QoS association information in the specific prediction time period is to be sent by the access network device.

For example, if the first request includes the indication carrying validity time, the first message further includes the validity time corresponding to the QoS association information. If the access network device finds, based on the indication of the validity time, that QoS association information that has been sent to the core network element is invalid, the access network device may resend the QoS association information, and the core network element obtains the first QoS parameter set through prediction based on the QoS association information resent by the access network device. Alternatively, the access network device may indicate, to the core network element, that QoS association information sent last time is currently invalid. For example, the QoS association information includes QoS association information at a moment (t+1) to QoS association information at a moment (t+5) that are predicted at a moment t. The access network device finds, based on QoS association information associated with the terminal and/or QoS association information associated with the access network device that are/is at a moment (t+3) and that are/is obtained through actual measurement, that QoS association information obtained through prediction at the moment (t+3) is inaccurate or invalid. In this case, the access network device may indicate, to the core network element, that QoS association information predicted at a moment (t+4) and the QoS association information predicted at the moment (t+5) are also invalid, and the core network element cannot generate the first QoS parameter set based on the QoS association information at the moment (t+4) and the QoS association information at the moment (t+5).

In another implementation, the core network element does not need to send the first request. After obtaining the QoS association information, the access network device sends the first message to the core network element. Therefore, step S402 is optional, and is represented by a dashed line in the figure.

S404: The core network element determines the first QoS parameter set based on a second AI model and the QoS association information.

For a specific implementation of this step, refer to step S303 in the embodiment shown in FIG. 3. Details are not described herein again.

S405: The core network element sends a third QoS parameter set to the access network device. Correspondingly, the access network device receives the third QoS parameter set.

The third QoS parameter set is obtained based on user subscription information and historical QoS flow information. The third QoS parameter set includes one or more third QoS parameters. The QoS association information is not considered in the third QoS parameter set.

The third QoS parameter set may include a basic QoS parameter set, and may further include an alternative QoS parameter set.

The core network element may replace the third QoS parameter set with the first QoS parameter set, or may combine and send the third QoS parameter set and the first QoS parameter set together. Therefore, this step is optional, and is represented by a dashed line in FIG. 4.

S406: The core network element sends the first QoS parameter set to the access network device. Correspondingly, the access network device receives the first QoS parameter set.

After determining the first QoS parameter set, the core network element sends the first QoS parameter set to the access network device. For example, the core network element may first send the third QoS parameter set to the access network device, and then send the first QoS parameter set to the access network device; may first send the first QoS parameter set to the access network device, and then send the third QoS parameter set to the access network device; or may send the first QoS parameter set and the third QoS parameter set to the access network device at the same time. Therefore, an execution sequence of step S405 and step S406 is not limited in this application.

The first QoS parameter set includes one or more first QoS parameters. For example, the first QoS parameter set may be in a form of a QoS parameter list, and the list includes the one or more first QoS parameters.

Compared with the third QoS parameter set, the first QoS parameter set may further include at least one of the following information: an AI identifier associated with the first QoS parameter set and validity information corresponding to the first QoS parameter set.

The AI identifier associated with the first QoS parameter set is used to identify the first QoS parameter set. The AI identifier may be an identifier of the first AI model, an identifier of an AI service, or the like. For example, the AI identifier may be the identifier of the first AI model, so that the access network device can select, based on the identifier of the first AI model, a QoS parameter corresponding to a currently used AI model; and/or the AI identifier may be the identifier of the AI service, so that the access network device can select, based on the identifier of the AI service, a QoS parameter corresponding to a current AI service.

The validity information corresponding to the first QoS parameter set includes any one of the following: validity time, an applicable cell, and an applicable beam. The access network device may select, based on the validity message, a QoS parameter that is valid in a current time period.

For example, the validity time indicates a specific moment or a specific time period at which the first QoS parameter set delivered by the core network element is valid. The validity time may be represented by a moment and a time period (for example, start time and end time, or start time and duration).

For example, the applicable cell is a cell in which the first QoS parameter set delivered by the core network element can be used for communication. The applicable cell may be specifically represented by a cell identity. The core network element may send, to the access network device, a plurality of first QoS parameter sets corresponding to one or more cell identities. For example, a cell 1 corresponds to a pQoS parameter set 1, and a cell 2 corresponds to a pQoS parameter set 2. When the terminal moves to the cell 1, the access network device may use the pQoS parameter set 1. When the terminal moves to the cell 2, the access network device may use the pQoS parameter set 2.

For example, the applicable beam is a beam on which the first QoS parameter set delivered by the core network element can be used for communication. The applicable beam may be specifically represented by a beam identifier. The core network element may send, to the access network device, a plurality of first QoS parameter sets corresponding to one or more beam identifiers. For example, a beam 1 corresponds to a pQoS parameter set 1, and a beam 2 corresponds to a pQoS parameter set 2. If the access network device currently uses the beam 1 for communication, the access network device may use the pQoS parameter set 1 corresponding to the beam 1 for communication. If the access network device currently uses the beam 2 for communication, the access network device may use the pQoS parameter set 1 corresponding to the beam 2 for communication.

For example, the core network element may send the first QoS parameter set and the third QoS parameter set together to the access network device. For example, the core network element sends, to the access network device, a second message including the first QoS parameter set and the third QoS parameter set. The core network element may alternatively send the first QoS parameter set by using another signaling/procedure.

For example, the second message further includes a priority indicator of QoS parameter sets. The priority indicator of the QoS parameter sets indicates priorities of the first QoS parameter set and the third QoS parameter set. For example, the priority indicator may indicate any one of the following: the priority of the first QoS parameter set is higher than that of the third QoS parameter set, or the priority of the first QoS parameter set is lower than that of the third QoS parameter set.

In an implementation, the third QoS parameter set may include the basic QoS parameter set and the alternative QoS parameter set. In this case, the priority indicator may indicate any one of the following: the priority of the first QoS parameter set is higher than that of the basic QoS parameter set, and the priority of the first QoS parameter set is lower than that of the alternative QoS parameter set; the priority of the first QoS parameter set is lower than that of the basic QoS parameter set and that of the alternative QoS parameter set; or the priority of the first QoS parameter set is higher than that of the basic QoS parameter set and that of the alternative QoS parameter set.

For a message format of the second message, there may be the following several implementations.

In an implementation, the message format of the second message is shown in the Table 6 below.

**Table 6**

| |
|---|
| QoS Flow Level QoS Parameters |
| Priority indicator |
| QoS Flow Level QoS Parameters Set Item |
| pQoS Flow Level QoS Parameters Set Item |
| >AI identifier associated with a first QoS parameter set |
| >Validity information corresponding to the first QoS parameter set |
| >CHOICE *QoS Characteristics* |
| *>>Non-dynamic 5QI* |
| >>>Non Dynamic 5QI Descriptor |
| *>>Dynamic 5QI* |
| >>>Dynamic 5QI Descriptor |
| >Allocation and Retention Priority (ARP) |
| >GBR QoS Flow Information |
| Reflective QoS Attribute (RQA) |

The second message includes the priority indicator, the third QoS parameter set (QoS Flow Level QoS Parameters Set Item), and the first QoS parameter set (pQoS Flow Level QoS Parameters Set Item). The first QoS parameter set includes one or more QoS parameters, and may further include the AI identifier associated with the first QoS parameter set and the validity information corresponding to the first QoS parameter set.

After receiving the second message, the access network device may select an available QoS parameter set based on the priority indicator. For example, the priority indicator indicates that the priority of the first QoS parameter set is lower than that of the third QoS parameter set, and the validity information corresponding to the first QoS parameter set is a time period. In this case, the access network device first attempts, based on the priority indicator, to use a third QoS parameter set corresponding to the current time period, and if the third QoS parameter set does not meet a service requirement, the access network device selects a first QoS parameter set corresponding to the current time period. The third QoS parameter set corresponding to the current time period is a third QoS parameter set in a validity time period, and the first QoS parameter set corresponding to the current time period is a first QoS parameter set in the validity time period.

In another implementation, the first QoS parameter set may be obtained based on the alternative QoS parameter set. In this implementation, the first QoS parameter set may also be referred to as an alternative pQoS parameter set. Compared with the alternative QoS parameter set, the alternative pQoS parameter set may further include at least one of the following information: the AI identifier associated with the first QoS parameter set and the validity information corresponding to the first QoS parameter set. For meanings of the AI identifier and the validity information, refer to the foregoing descriptions.

A sorting manner of priority indicators of the alternative QoS parameter set and the alternative pQoS parameter set may be performed based on indexes of alternative QoS parameter sets, and a priority is higher by default when an index is in the front.

A format of the second message may be shown in Table 7 below.

**Table 7**

| |
|---|
| Alternative QoS Parameters Set List |
| Alternative QoS Parameters Set Item |
| >Alternative QoS Parameters Set Index |
| >AI identifier associated with a QoS parameter set |
| >Validity information corresponding to the QoS parameter set |
| >Guaranteed Flow Bit Rate Downlink (GFBR-DL) |
| >Guaranteed Flow Bit Rate Uplink (GFBR-UL) |
| >Packet Delay Budget (PDB) |
| >Packet Error Rate (PER) |

Compared with the alternative QoS parameter set shown in Table 5, the alternative QoS parameter set in the second message further includes the AI identifier and the validity information. This indicates that the alternative QoS parameter set is an alternative pQoS parameter set.

A format of the second message may alternatively be shown in Table 8 below.

**Table 8**

| |
|---|
| Alternative QoS Parameters Set List |
| CHOICE *Alternative QoS Parameters* |
| Alternative QoS Parameters Set Item |
| > Alternative QoS Parameters Set Index |
| >Guaranteed Flow Bit Rate Downlink (GFBR-DL) |
| >Guaranteed Flow Bit Rate Uplink (GFBR-UL) |
| >Packet Delay Budget (PDB) |
| >Packet Error Rate (PER) |
| Alternative pQoS Parameters Set Item |
| > Alternative pQoS Parameters Set Index |
| >AI identifier associated with a pQoS parameter set |
| >Validity information corresponding to the pQoS parameter set |
| >Guaranteed Flow Bit Rate Downlink (GFBR-DL) |
| >Guaranteed Flow Bit Rate Uplink (GFBR-UL) |
| >Packet Delay Budget (PDB) |
| >Packet Error Rate (PER) |

The second message includes the priority indicator (referring to Table 6), the basic QoS parameter set (referring to Table 6), and the alternative QoS parameter set (Alternative QoS Parameters Set Item) and the alternative pQoS parameter set (Alternative pQoS Parameters Set Item) that are shown in Table 8. The priority indicator indicates that a priority of the basic QoS parameter set is higher than a priority of the alternative QoS parameter set.

For example, the validity information corresponding to the pQoS parameter set carried in the second message is a cell identity. After receiving the second message, the access network device first attempts a basic QoS parameter corresponding to a current cell identity in the basic QoS parameter set. If the basic QoS parameter corresponding to the current cell identity does not meet the service requirement, and because the index of the alternative QoS parameter set is before an index of the alternative pQoS parameter set, the access network device attempts an alternative QoS parameter corresponding to the current cell in the alternative QoS parameter set. If the alternative QoS parameter corresponding to the current cell does not meet the service requirement, the access network device may finally attempt an alternative pQoS parameter corresponding to the current cell.

Alternatively, the core network element may send only one QoS parameter set. The QoS parameter set is a parameter set obtained by combining the first QoS parameter set and the third QoS parameter set, or the QoS parameter set is the first QoS parameter set, in other words, the third QoS parameter set is replaced with the first QoS parameter set.

In this way, the access network device may obtain a new available first QoS parameter before the third QoS parameter does not meet the service requirement, to avoid a delay caused by frequent switching of a QoS parameter by the access network device and waiting for the core network element to deliver a new QoS parameter. This helps the access network device obtain a more appropriate QoS parameter to ensure the service requirement of the terminal.

S407: The access network device selects an available QoS parameter set from the first QoS parameter set and the third QoS parameter set.

The access network device may select a QoS parameter set with a higher priority from the first QoS parameter set and the third QoS parameter set based on the priority indicator of the QoS parameter sets.

When the QoS parameter set with the higher priority is unavailable, a QoS parameter set with a lower priority is selected.

In an implementation, the method further includes the following steps.

S408: When the first QoS parameter set is selected, the access network device sends a usage status of the first QoS parameter set to the core network element. Correspondingly, the core network element receives the usage status of the first QoS parameter set. This step is optional, and is represented by a dashed line in FIG. 4.

To further optimize the second AI model, when the access network device selects the first QoS parameter set in step S407, but fails to attempt to use the one or more first QoS parameters in the first QoS parameter set, the access network device may send the usage status of the first QoS parameter set to the core network element.

The usage status may include at least one of the following information: an index of the currently used first QoS parameter set, an index of the first QoS parameter that fails to be used in the first QoS parameter set, and a failure cause indication. For example, the access network device and the core network element may prestore a plurality of failure causes by indexes, and the failure cause indication includes an index corresponding to a failure cause. Therefore, after receiving the failure cause indication, the core network element may determine the failure cause based on a correspondence between the prestored index and failure cause. For example, the first QoS parameter is a PER, and a cause of a use failure is that the PER is higher than a first threshold. For another example, the first QoS parameter is a maximum data burst volume, and a cause of a use failure is that the maximum data burst volume is less than a second threshold.

S409: The core network element optimizes the second AI model based on the usage status of the first QoS parameter set.

After receiving the usage status of the first QoS parameter set, the core network element uses the usage status as AI feedback information, to optimize the second AI model.

For example, if the usage status includes the failure cause indication and the failure cause indication is the index, the core network element may determine the failure cause based on the correspondence between the prestored index and failure cause, and optimize the second AI model based on the failure cause.

This step is optional, and is represented by a dashed line in FIG. 4.

According to the communication method provided in this embodiment of this application, the core network element may obtain the QoS association information predicted by the access network device, where the QoS association information includes the predicted information associated with the terminal and/or the predicted information associated with the access network device; the core network element obtains the first QoS parameter set through prediction based on the QoS association information; and the core network element sends the first QoS parameter set to the access network device. Because the first QoS parameter set is obtained based on the QoS association information predicted by the access network device, a service requirement on an access network side can be better met, so that the access network device can efficiently obtain an available QoS parameter, and efficiency of performing service processing by using the QoS parameter is further improved.

FIG. 5 is a schematic flowchart of still another communication method according to an embodiment of this application. The method may include the following steps.

S501: An access network device obtains QoS association information predicted based on a first AI model.

For a specific implementation of this step, refer to step S301 in the embodiment shown in FIG. 3 or step S401 in the embodiment shown in FIG. 4. Different from the embodiment shown in FIG. 4, in this embodiment, the first AI model of the access network device has a capability of further processing predicted information associated with a terminal and predicted information associated with the access network device to obtain a second QoS parameter set. Specifically, the access network device may perform, based on at least one of historical information associated with the terminal, historical information associated with the access network device, the predicted information associated with the terminal, the predicted information associated with the access network device, and a historical QoS parameter, AI inference by using the first AI model, to obtain the QoS association information. The QoS association information includes the second QoS parameter set. The second QoS parameter set includes one or more second QoS parameters.

S502: The access network device sends a first message to a core network element. Correspondingly, the core network element receives the first message.

Considering that final determining of a QoS parameter set is related to data such as terminal subscription information in the core network element, the predicted second QoS parameter set obtained by the access network device may not be directly used. Therefore, the core network element may determine a final QoS parameter set based on data such as the terminal subscription information. After obtaining the predicted QoS association information, the access network device may send the first message to the core network element. The first message includes the QoS association information. Further, the first message may include validity time corresponding to the QoS association information. The validity time corresponding to the QoS association information is information about a time period in which the QoS association information is valid. The QoS association information is used to determine a first QoS parameter set.

The access network device may periodically send the QoS association information to the core network element at a prediction interval of generating the QoS association information based on the first AI model, and the QoS association information sent in each periodicity may be different. Alternatively, the access network device may send, after obtaining new QoS association information, the QoS association information to the core network element.

S503: The core network element determines the first QoS parameter set based on a second AI model and the QoS association information.

After receiving the QoS association information, the core network element may determine the first QoS parameter set based on the terminal subscription data and the QoS association information by using the second AI model of the core network element. The first QoS parameter set includes one or more first QoS parameters.

In an implementation, if the core network element considers that the second QoS parameter set is inappropriate, for example, the core network element determines, based on the terminal subscription information obtained by the core network element, a parameter range corresponding to each QoS parameter in the QoS parameter set, but a part of or all of QoS parameters in the second QoS parameter set are not within a corresponding parameter range, the core network element considers that the second QoS parameter set is inappropriate, and may send a rejection indication to the access network device. The rejection indication indicates that the second QoS parameter set is inappropriate. Further, the core network element may further indicate, to the access network device, a specific parameter and/or a reason that cause/causes the second QoS parameter set to be inappropriate. After receiving the indication, the access network device may select to re-predict the second QoS parameter set based on the implementation.

In an implementation, if the core network element considers that the second QoS parameter set is appropriate and does not need to be modified, the core network element may indicate, to the access network device, that the second QoS parameter set is appropriate.

In an implementation, if the core network element considers that the second QoS parameter set is appropriate but needs to be properly modified, the core network element may modify the second QoS parameter set to obtain the first QoS parameter set. Specifically, the modification may be any one of the following: selecting several second QoS parameters in the second QoS parameter set; selecting several alternative QoS parameters in the second QoS parameter set; and modifying some second QoS parameters in the second QoS parameter set. Further, the core network element may further indicate, to the access network device, a reason for modifying the second QoS parameter set.

In this case, QoS parameters in the first QoS parameter set obtained in the foregoing manner and the second QoS parameter set may be completely the same, partially the same, or completely different.

S504: The core network element sends a third QoS parameter set to the access network device. Correspondingly, the access network device receives the third QoS parameter set.

For a specific implementation of this step, refer to step S405 in the embodiment shown in FIG. 4. Details are not described herein again.

S505: The core network element sends the first QoS parameter set to the access network device. Correspondingly, the access network device receives the first QoS parameter set.

For a specific implementation of this step, refer to step S406 in the embodiment shown in FIG. 4. Details are not described herein again.

S506: The access network device selects an available QoS parameter set from the first QoS parameter set and the third QoS parameter set.

For a specific implementation of this step, refer to step S407 in the embodiment shown in FIG. 4.

S507: When the first QoS parameter set is selected, the access network device optimizes the first AI model based on a usage status of the first QoS parameter set.

The access network device may optimize the first AI model based on the usage status of the first QoS parameter set. For example, the access network device uses a failure cause (for example, inaccurate UE service prediction or incorrect validity time) of the first QoS parameter as feedback information, to optimize the first AI model.

For example, when the first QoS parameter set is selected, the access network device may further send the usage status of the first QoS parameter set to the core network element. The core network element optimizes the second AI model based on the usage status of the first QoS parameter set.

According to the communication method provided in this embodiment of this application, the core network element may obtain the QoS association information predicted by the access network device, where the QoS association information includes the second QoS parameter set predicted by the access network device; the core network element obtains the first QoS parameter set through prediction based on the QoS association information; and the core network element sends the first QoS parameter set to the access network device. Because the first QoS parameter set is obtained based on the QoS association information predicted by the access network device, a service requirement on an access network side can be better met, so that the access network device can efficiently obtain an available QoS parameter, and efficiency of performing service processing by using the QoS parameter is further improved.

The foregoing embodiment relates to determining the first QoS parameter set by the core network element based on an AI model. The following embodiment describes a case in which the access network device determines the first QoS parameter set based on the AI model.

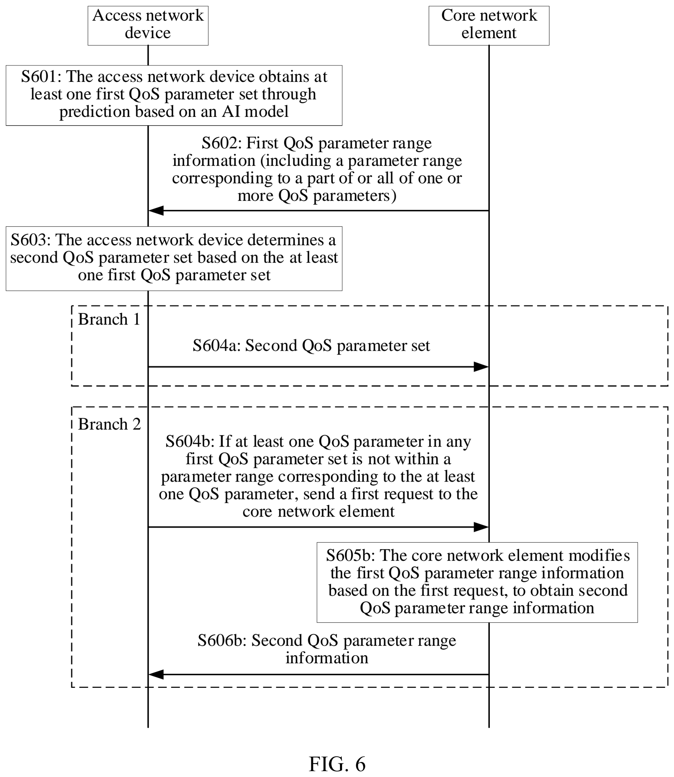

FIG. 6 is a schematic flowchart of still another communication method according to an embodiment of this application. The method may include the following steps.

S601: An access network device obtains at least one first QoS parameter set through prediction based on an AI model.

For a specific implementation of this step, refer to step S301 in the embodiment shown in FIG. 3 or step S501 in the embodiment shown in FIG. 5. Details are not described herein again. Each of the at least one first QoS parameter set includes one or more QoS parameters.

S602: A core network element sends first QoS parameter range information to the access network device. Correspondingly, the access network device receives the first QoS parameter range information.

Different QoS parameters may respectively have corresponding parameter ranges. For example, a parameter range of 5QI is 0 to 255, a parameter range of priority is 2 to 4, and a range of packet delay budget is 50 ms to 300 ms.

In this embodiment, the core network element sends the first QoS parameter range information to the access network device. The first QoS parameter range information is a parameter range of an available QoS parameter determined by the core network element based on information such as terminal subscription data. The first QoS parameter range information includes a parameter range corresponding to a part of or all of one or more QoS parameters. The core network element may limit, based on a requirement, the parameter range corresponding to a part of or all of the one or more QoS parameters. For some QoS parameters, the core network element may not limit a parameter range of the QoS parameters. In this case, the core network element considers that these QoS parameters are available, and does not need to determine whether these QoS parameters are within a corresponding parameter range. For example, a range of packet error rate may not be limited.

In addition, different QoS parameters may have corresponding identifiers. In this case, the first QoS parameter range information includes a parameter range corresponding to an identifier of a part of or all of the one or more QoS parameters.

For example, the core network element may send the first QoS parameter range information to the access network device before the access network device determines a second QoS parameter set based on the first QoS parameter range information. In other words, an execution sequence of step S601 and step S602 is not limited.

Optionally, before step S602, the access network device may send a request to the core network element, to request to obtain the first QoS parameter range information. The request may further include an identifier of at least one terminal. When the request includes identifiers of a plurality of terminals, the access network device may request, at a time, first QoS parameter range information respectively corresponding to the plurality of terminals.

S603: The access network device determines the second QoS parameter set based on the at least one first QoS parameter set.

After receiving the first QoS parameter range information, the access network device determines, for each of the at least one first QoS parameter set obtained through prediction in step S601, whether each first QoS parameter that is in the first QoS parameter set and whose parameter range needs to be limited is within a parameter range corresponding to the first QoS parameter, and the access network device finally determines the second QoS parameter set. Specifically, for any one of the at least one first QoS parameter set, if one or more first QoS parameters in a plurality of first QoS parameters whose parameter ranges need to be limited and that are in the first QoS parameter set are not within a parameter range corresponding to the one or more first QoS parameters, the first QoS parameter set is excluded. If all first QoS parameters that are in the first QoS parameter set and whose parameter ranges need to be limited are within parameter ranges corresponding to the first QoS parameters, the first QoS parameter set is used as the second QoS parameter set, and each of obtained one or more QoS parameters that is in the second QoS parameter set and whose parameter range needs to be limited is within a parameter range corresponding to each QoS parameter.

In step S603, in the plurality of first QoS parameters whose parameter ranges need to be limited and that are in the first QoS parameter set, one or more first QoS parameters may not be within a parameter range corresponding to the first QoS parameter. In this case, a determining result of the access network device may be implemented in the following two implementations:

### Implementation 1:

S604a: The access network device sends the second QoS parameter set to the core network element. Correspondingly, the core network element receives the second QoS parameter set.

If the access network device finally determines the second QoS parameter set from the at least one first QoS parameter set, the access network device uses the second QoS parameter set, and sends the second QoS parameter set to the core network element, so that the core network element can learn of a QoS parameter set currently used by the access network device, and communicate with the access network device and the terminal based on the QoS parameter set.

### Implementation 2:

S604b: If at least one QoS parameter in any first QoS parameter set is not within a parameter range corresponding to the at least one QoS parameter, send a first request to the core network element. Correspondingly, the core network element receives the first request.

Specifically, for the at least one first QoS parameter set obtained by the access network device, if the at least one QoS parameter in the any first QoS parameter set is not within the parameter range corresponding to the at least one QoS parameter, it indicates that the first QoS parameter set predicted by the access network device is unavailable, and the access network device sends the first request to the core network element. The first request is for requesting to modify the first QoS parameter range information. The first request includes an identifier of a QoS parameter that is in the first QoS parameter set and that is not within a parameter range.

For example, the first request further includes at least one of the following information: an identifier of the first QoS parameter set, a reason why the first QoS parameter set is unavailable (for example, a currently predicted value of a 5QI is not within a parameter range of a 5QI delivered by the core network element), and a parameter value of the QoS parameter that is in the first QoS parameter set and that is not within the parameter range. The information may be used by the core network element to accurately modify a QoS parameter range.

S605b: The core network element modifies the first QoS parameter range information based on the first request, to obtain second QoS parameter range information.

Specifically, after receiving the first request, the core network element may modify the first QoS parameter range information. For example, the core network element may expand a QoS parameter range that is requested to be modified, to obtain the second QoS parameter range information. For another example, before the modification, a parameter range corresponding to a first QoS parameter is [0, 10], and the core network element modifies the parameter range to [11, 20] based on the first request. The second QoS parameter range information includes a parameter range that is requested to be modified and that corresponds to each of one or more QoS parameters.

S606b: The core network element sends the second QoS parameter range information to the access network device. Correspondingly, the access network device receives the second QoS parameter range information.

After receiving the second QoS parameter range information, the access network device may re-determine the second QoS parameter set based on the second QoS parameter range information.

According to the communication method provided in this embodiment of this application, the access network device obtains the at least one first QoS parameter set through prediction based on the AI model of the access network device, and determines the second QoS parameter set based on the first QoS parameter range information delivered by the core network element. The access network device may determine an available QoS parameter set based on a QoS parameter set obtained by the access network device through prediction and QoS parameter range information delivered by the core network element, to meet a service requirement of the terminal. This improves efficiency of obtaining the available QoS parameter by the access network device, and improves an application effect of the QoS parameter.

It may be understood that, in the foregoing embodiments, the method and/or step implemented by the access network device may also be implemented by a component (for example, a chip or a circuit) that may be used in the access network device, and the method and/or step implemented by the core network element may also be implemented by a component (for example, a chip or a circuit) that may be used in the core network element.

The foregoing mainly describes the solutions provided in embodiments of this application from a perspective of interaction between network elements. Correspondingly, an embodiment of this application further provides a communication apparatus, and the communication apparatus is configured to implement the foregoing various methods. The communication apparatus may be the access network device in the foregoing method embodiments, or may be a component that may be used in the access network device. Alternatively, the communication apparatus may be the core network element in the foregoing method embodiments, or may be a component that may be used in the core network element. It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. During actual implementation, another division manner may be used.

Based on the same concept of the foregoing communication method, this application further provides the following communication apparatus.

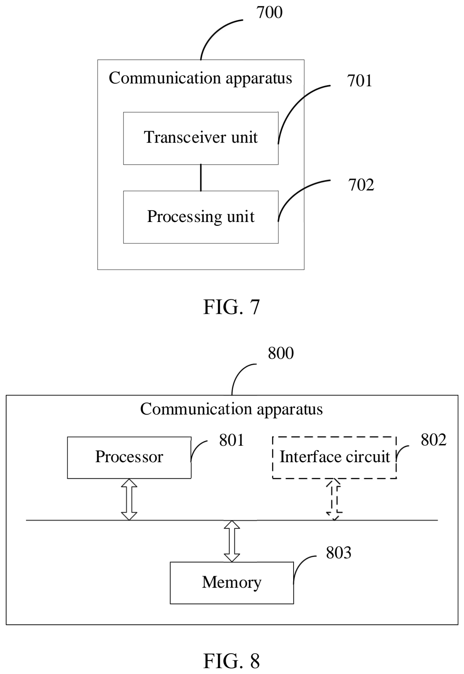

FIG. 7 is a diagram of a structure of a communication apparatus according to an embodiment of this application. The communication apparatus 700 includes a transceiver unit 701 and a processing unit 702.

When the communication apparatus is configured to implement the functions of the access network device in the foregoing method embodiments, the transceiver unit 701 is configured to perform the operations of the access network device in S302 and S304 in the embodiment shown in FIG. 3, and the processing unit 702 is configured to perform the operations in S301 in the embodiment shown in FIG. 3. Alternatively, the transceiver unit 701 is configured to perform the operations of the access network device in S402, S403, S405, S406, and S408 in the embodiment shown in FIG. 4, and the processing unit 702 is configured to perform the operations in S401 and S407 in the embodiment shown in FIG. 4. Alternatively, the transceiver unit 701 is configured to perform the operations of the access network device in S502, S504, S505, and S507 in the embodiment shown in FIG. 5, and the processing unit 702 is configured to perform the operations in S501, S506, and S507 in the embodiment shown in FIG. 5. Alternatively, the transceiver unit 701 is configured to perform the operations of the access network device in S602, S604a, S604b, and S606b in the embodiment shown in FIG. 6, and the processing unit 702 is configured to perform the operations in S601 and S603 in the embodiment shown in FIG. 6.

When the communication apparatus is configured to implement the functions of the core network element in the foregoing method embodiments, the transceiver unit 701 is configured to perform the operations of the core network element in S302 and S304 in the embodiment shown in FIG. 3, and the processing unit 702 is configured to perform the operations in S303 in the embodiment shown in FIG. 3. Alternatively, the transceiver unit 701 is configured to perform the operations of the core network element in S402, S403, S405, S406, and S408 in the embodiment shown in FIG. 4, and the processing unit 702 is configured to perform the operations in S404 and S407 in the embodiment shown in FIG. 4. Alternatively, the transceiver unit 701 is configured to perform the operations of the core network element in S502, S504, S505, and S507 in the embodiment shown in FIG. 5, and the processing unit 702 is configured to perform the operations in S503 in the embodiment shown in FIG. 5. Alternatively, the transceiver unit 701 is configured to perform the operations of the core network element in S602, S604a, S604b, and S606b in the embodiment shown in FIG. 6, and the processing unit 702 is configured to perform the operations in S605b in the embodiment shown in FIG. 6.

For specific implementations of the transceiver unit 701 and the processing unit 702, refer to the descriptions in the foregoing method embodiments.

FIG. 8 is a diagram of a structure of another communication apparatus according to an embodiment of this application. The communication apparatus 800 includes a processor 801 and a memory 803. The memory 803 is configured to: store instructions executed by the processor 801, store input data needed by the processor 801 to run the instructions, or store data generated after the processor 801 runs the instructions. Optionally, the communication apparatus 800 may further include an interface circuit 802 (represented by a dashed line in the figure), and the processor 801 and the interface circuit 802 are coupled to each other. It may be understood that the interface circuit 802 may be a transceiver or an input/output interface. The processor 801 is configured to implement a function of the processing unit 702 in the embodiment shown in FIG. 7, and the interface circuit 802 is configured to implement a function of the transceiver unit 701 in the embodiment shown in FIG. 7.

When the communication apparatus is a chip used in an access network device, the chip implements the function of the access network device in the foregoing method embodiments. The chip receives information from another module (for example, a radio frequency module or an antenna) in the access network device, where the information is sent by a core network element to the access network device. Alternatively, the chip sends information to another module (for example, a radio frequency module or an antenna) in the access network device, where the information is sent by the access network device to a core network element.

When the communication apparatus is a chip used in a core network element, the chip implements the function of the core network element in the foregoing method embodiments. The chip receives information from another module (for example, a radio frequency module or an antenna) in the core network element, where the information is sent by an access network device to the core network element. Alternatively, the chip sends information to another module (for example, a radio frequency module or an antenna) in the core network element, where the information is sent by the core network element to the access network device.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and the transceiver performs an input operation (corresponding to the foregoing receiving operation) and an output operation (corresponding to the foregoing sending operation); and the processing unit is an integrated processor, a microprocessor, or an integrated circuit.

Division into the modules in this application is an example and is merely logical function division. There may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides a communication system, including the foregoing communication apparatus.

An embodiment of this application further provides a circuit. The circuit is coupled to a memory, and the circuit is configured to perform the methods shown in the foregoing embodiments. The circuit may include a chip circuit.

When the communication apparatus is a module used in an access network device, the module in the access network device implements the function of the access network device in the foregoing method embodiments. The module in the access network device receives information from another module (for example, a radio frequency module or an antenna) in the access network device, where the information is sent by a core network element to the access network device. Alternatively, the module in the access network device sends information to another module (for example, a radio frequency module or an antenna) in the access network device, where the information is sent by the access network device to a core network element. The access network device module herein may be a baseband chip of the access network device, may be a CU, a DU, or another module, or may be an apparatus in an O-RAN architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in the memory. A processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or transistor logic device, or a discrete hardware component, and the processor may implement or perform methods, steps, and logical block diagrams that are disclosed in this application. The general-purpose processor may be a microprocessor or any regular processor or the like. The steps of the methods disclosed with reference to this application may be directly performed and completed by a hardware processor, or may be performed and completed by a combination of hardware in the processor and a software module.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include a chip and another discrete device. This is not specifically limited in embodiments of this application.

The memory in this application may alternatively be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state disk (solid-state drive, SSD), or the memory may be a volatile memory (volatile memory), for example, a random access memory (random access memory, RAM).

It should be understood that unless otherwise specified, "/" in descriptions of this application indicates an "or" relationship between associated objects. For example, A/B may indicate A or B, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the terms such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

The terms "including", "having", and any other variant thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

## Claims

1. A communication method, wherein the method comprises:
obtaining quality of service QoS association information predicted based on a first artificial intelligence AI model;
sending the QoS association information to a core network element, wherein the QoS association information is used to determine a first QoS parameter set; and
receiving the first QoS parameter set from the core network element, wherein the first QoS parameter set comprises one or more first QoS parameters.

2. The method according to claim 1, wherein the first QoS parameter set is obtained by the core network element through prediction based on a second AI model and the QoS association information.

3. The method according to claim 1 or 2, wherein the QoS association information comprises at least one of the following: predicted information associated with a terminal and predicted information associated with an access network device.

4. The method according to claim 3, wherein the method further comprises:
receiving a first request from the core network element, wherein the first request is for requesting to obtain the QoS association information, and the first request comprises at least one of the following information: a requested content indication, a reporting mechanism indication, a prediction time period, and an indication carrying validity time.

5. The method according to claim 4, wherein the sending the QoS association information to the core network element comprises:
sending a first message to the core network element based on the first request, wherein the first message comprises the QoS association information and the validity time corresponding to the QoS association information.

6. The method according to claim 1 or 2, wherein the QoS association information comprises a second QoS parameter set, the second QoS parameter set comprises one or more second QoS parameters, and the second QoS parameter set is based on at least one of predicted information associated with a terminal and predicted information associated with an access network device.

7. The method according to claim 6, wherein QoS parameters in the first QoS parameter set and the second QoS parameter set are completely the same, partially the same, or completely different.

8. The method according to any one of claims 1 to 7, wherein the first QoS parameter set comprises at least one of the following information: an AI identifier associated with the first QoS parameter set and validity information corresponding to the first QoS parameter set.

9. The method according to claim 8, wherein the validity information corresponding to the first QoS parameter set comprises any one of the following: validity time, an applicable cell, and an applicable beam.

10. The method according to any one of claims 1 to 9, wherein the method further comprises:
receiving a third QoS parameter set from the core network element, wherein the third QoS parameter set is obtained based on user subscription information and historical QoS flow information, and the third QoS parameter set comprises one or more third QoS parameters; and
selecting an available QoS parameter set from the first QoS parameter set and the third QoS parameter set.

11. The method according to claim 10, wherein the first QoS parameter set and the third QoS parameter set are comprised in a second message, the second message further comprises a priority indicator of QoS parameter sets, and the priority indicator of the QoS parameter sets indicates priorities of the first QoS parameter set and the third QoS parameter set; and
the selecting the available QoS parameter set from the first QoS parameter set and the third QoS parameter set comprises:
selecting a QoS parameter set with a higher priority from the first QoS parameter set and the third QoS parameter set based on the priority indicator of the QoS parameter sets; or
when the QoS parameter set with the higher priority is unavailable, selecting a QoS parameter set with a lower priority.

12. The method according to claim 11, wherein when the first QoS parameter set is selected, the method further comprises:
sending a usage status of the first QoS parameter set to the core network element.

13. The method according to claim 11 or 12, wherein when the first QoS parameter set is selected, the method further comprises:
optimizing the first AI model based on the usage status of the first QoS parameter set.

14. A communication method, wherein the method comprises:
receiving quality of service QoS association information from an access network device, wherein the QoS association information is used to determine a first QoS parameter set, and the QoS association information is predicted by the access network device based on a first AI model;
determining the first QoS parameter set based on the QoS association information, wherein the first QoS parameter set comprises one or more first QoS parameters; and
sending the first QoS parameter set to the access network device.

15. The method according to claim 14, wherein the determining the first QoS parameter set based on the QoS association information comprises:
obtaining the QoS parameter set through prediction based on a second AI model and the QoS association information.

16. The method according to claim 14 or 15, wherein the QoS association information comprises at least one of the following: predicted information associated with a terminal and predicted information associated with the access network device.

17. The method according to any one of claims 14 to 16, wherein the method further comprises:
sending a first request to the access network device, wherein the first request is for requesting to obtain the QoS association information, and the first request comprises at least one of the following information: a requested content indication, a reporting mechanism indication, a prediction time period, and an indication carrying validity time.

18. The method according to claim 17, wherein the receiving the QoS association information from the access network device comprises:
receiving a first message from the access network device, wherein the first message comprises the QoS association information and the validity time corresponding to the QoS association information.

19. The method according to claim 14 or 15, wherein the QoS association information comprises a second QoS parameter set, the second QoS parameter set comprises one or more second QoS parameters, and the second QoS parameter set is based on at least one of predicted information associated with a terminal and predicted information associated with the access network device.

20. The method according to claim 19, wherein QoS parameters in the first QoS parameter set and the second QoS parameter set are completely the same, partially the same, or completely different.

21. The method according to any one of claims 14 to 20, wherein the first QoS parameter set comprises at least one of the following information: an AI identifier associated with the first QoS parameter set and validity information corresponding to the first QoS parameter set.

22. The method according to claim 21, wherein the validity information corresponding to the first QoS parameter set comprises any one of the following: validity time, an applicable cell, and an applicable beam.

23. The method according to any one of claims 14 to 22, wherein the method further comprises:
sending a third QoS parameter set to the access network device, wherein the third QoS parameter set is obtained based on user subscription information and historical QoS flow information, and the third QoS parameter set comprises one or more third QoS parameters.

24. The method according to claim 23, wherein the first QoS parameter set and the third QoS parameter set are comprised in a second message, the second message further comprises a priority indicator of QoS parameter sets, and the priority indicator of the QoS parameter sets indicates priorities of the first QoS parameter set and the third QoS parameter set.

25. The method according to any one of claims 15 to 24, wherein the method further comprises:
receiving a usage status of the first QoS parameter set from the access network device; and
optimizing the second AI model based on the usage status of the first QoS parameter set.

26. A communication apparatus, wherein the apparatus is configured to perform the method according to any one of claims 1 to 25.

27. A communication system, comprising an access network device and a core network element, wherein the access network device is configured to perform the method according to any one of claims 1 to 13, and the core network element is configured to perform the method according to any one of claims 14 to 25.

28. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 25 by using a logic circuit or by executing code instructions.

29. A computer-readable storage medium, wherein the storage medium stores a computer program or instructions; and when the computer program or the instructions are executed by a communication apparatus, the method according to any one of claims 1 to 25 is implemented.

30. A computer program product comprising instructions, wherein when the instructions are run on a communication apparatus, the method according to any one of claims 1 to 25 is implemented.
